# FASCICULE DE BREVET EUROPEEN

(11) **EP 1 226 858 B1**
(45) Date de publication et mention de la délivrance du brevet: **22.09.2004**
(21) Numéro de dépôt: 02354019.8
(22) Date de dépôt: 29.01.2002
(51) Int. Cl.: B01D 29/21

(54) **Couronne dentée pour cartouche filtrante**
Zahnkranz für Filterpatrone
Toothed rim for filter cartridge

(30) Priorité: 30.01.2001 FR 0101246
(43) Date de publication de la demande: 31.07.2002
(73) Titulaire: SOCIETE SIEBEC, 38600 Fontaine (FR)
(72) Inventeur: Yvan, Pesenti, 38640 Claix (FR)
(74) Mandataire: Hecke, G.

(56) Documents cités:
- US-A- 2 988 227
- US-A- 3 305 161
- US-A- 5 169 524
- US-A- 5 601 717

## Description

L'invention est relative à un dispositif de maintien s'adaptant sur une cartouche de filtre cylindrique dans laquelle l'élément filtrant est constitué d'un grand nombre de plis permettant d'obtenir un maximum de surface de filtration dans un volume réduit.

Pour obtenir une bonne efficacité des plis, il est important que ceux-ci soient correctement rangés et maintenus à un écartement précis sur toute leur hauteur.

Selon une technique connue, le dispositif de maintien des plis est constitué par une couronne circulaire moulée dans un matériau thermoplastique adéquat et portant des dents dirigées vers l'intérieur, chaque dent s'insérant entre deux plis. Selon la hauteur de la cartouche, le nombre de couronnes à placer peut être variable.

L'inconvénient des couronnes fermées sur elles - mêmes réside dans leur mise en place qui ne peut se faire qu'en les enfilant par l'extrémité des plis lorsque ceux-ci ne sont pas encore positionnés et maintenus. Cette opération est longue et délicate, donc coûteuse.

Pour la même raison, il est impossible de remplacer une couronne sur une cartouche existante, ou d'en ajouter une ou plusieurs si des conditions sévères d'exploitation nécessitent un maintien plus robuste.

Le document US-A-2988227 décrit une couronne dentée assurant le positionnement et le maintien de l'élément filtrant d'une cartouche plissée, la couronne comportant une ceinture équipée d'une série de dents en nombre égal au nombre de plis de la cartouche, les dents étant dirigées vers l'intérieur de manière à s'insérer entre les plis consécutifs de la cartouche. La couronne est formée par une ceinture ouverte susceptible de prendre une forme d'anneau circulaire lors du montage, et dont les deux extrémités délimitant l'ouverture sont assemblées l'une à l'autre par des moyens de fixation . Ces derniers sont constitués par un crochet fixé à l'une des extrémités, et une encoche prévue dans l'autre extrémité. La fermeture de la ceinture s'opère par l'introduction du crochet dans l'encoche, ce qui nécessite une manipulation précise et compliquée.

L'objet de la présente invention consiste à réaliser une couronne dentée permettant de simplifier le positionnement et le maintien de l'élément filtrant d'une cartouche plissée.

Selon l'invention, les moyens de fixation de la ceinture sont formés par une pièce d'agrafage accessoire comprenant un coulisseau engagé sur une des extrémités de la couronne, et venant s'encliqueter par coulissement sur l'autre extrémité.

Lors de l'assemblage de la cartouche, les couronnes peuvent être fixées sur un outillage qui les maintient dans une position favorable, notamment rectiligne. Dans cette position, l'introduction des plis du média-filtrant est nettement facilitée, et on peut même envisager une distribution automatique de ces plis, si l'importance des séries à fabriquer le justifie. Dans le cas contraire, l'introduction peut rester manuelle, mais devient nettement plus aisée, donc plus rapide et moins coûteuse.

Selon une mode de réalisation préférentiel, l'une des extrémités comprend une première partie en queue d'aronde, une rampe dotée d'un premier bec d'accrochage, et une languette terminale sur laquelle le coulisseau prend appui lors de l'engagement sur la queue d'aronde. L'autre extrémité comporte une deuxième partie en queue d'aronde de forme similaire à la première partie en queue d'aronde, et le coulisseau comprend des faces obliques en forme de queue d'aronde, et une rainure centrale se terminant par un deuxième bec d'accrochage destiné à coopérer avec le premier bec d'accrochage.

D'autres avantages et caractéristiques ressortiront plus clairement de la description qui va suivre d'un mode de mise en oeuvre de l'invention donnée à titre d'exemple, et représenté aux dessins annexés, dans lesquels:
- la figure 1 est une vue en plan d'une couronne de l'invention.
- la figure 2 est une vue en perspective agrandie des deux extrémités de la couronne placées en regard l'une de l'autre, préalablement à l'agrafage.
- la figure 3 est la vue en perspective correspondante d'une pièce d'agrafage séparée désignée ci-après coulisseau, vue selon sa face externe.
- la figure 4 est une vue en perspective dudit coulisseau, vue selon la face interne.

On peut noter que le coulisseau, vu sa forme et sa dimension, peut facilement être moulé en même temps que la couronne, ce qui lui donne un coût de fabrication quasi-nul.

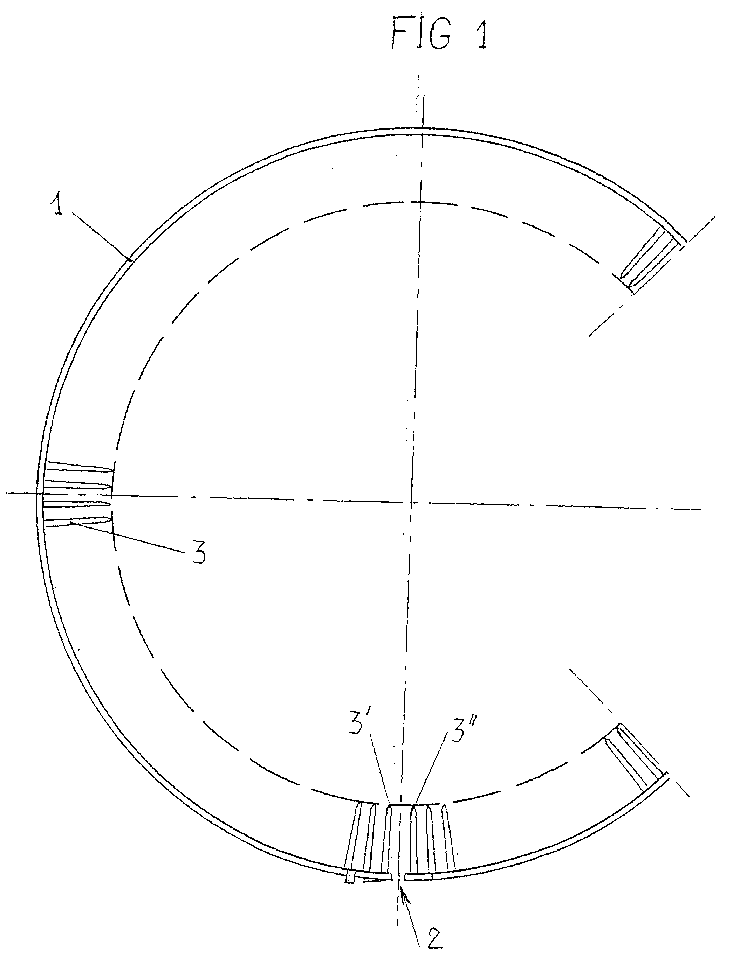

La figure 1 montre les deux éléments constitutifs de la couronne :
- la ceinture 1 qui, au lieu de former un anneau fermé, présente une ouverture en 2.
- les dents 3, dont le nombre égal au nombre de plis de la cartouche.

Il est avantageux de mouler la pièce dans la forme représentée, pour travailler avec un moule de forme générale carrée, et aussi pour que la forme naturelle de la pièce soit proche de celle qu'elle aura une fois montée. Toutefois, compte tenu de sa grande souplesse, on pourrait envisager de la mouler sous toute autre forme, y compris rectiligne.

Sur la figure 1, les dents d'extrémité 3', 3"sont plus écartées que le pas normal, afin de retrouver ce pas quand les extrémités auront été rapprochées et agrafées.

La figure 2 montre la configuration des deux extrémités à assembler. Celle de gauche comporte les éléments suivants :
- une partie en queue d'aronde 11
- une rampe 12 se terminant vers la gauche par un bec d'accrochage 13
- une collerette 14 permettant une préhension facile entre deux doigts lors de la manoeuvre d'agrafage
- une languette d'extrémité 15 sur laquelle le coulisseau viendra prendre appui pour faciliter son engagement sur la queue d'aronde, dont les extrémités sont chanfreinées dans le même but. 11, 12, et 13 sont des éléments fonctionnels, alors que 14 et 15 sont plutôt des éléments ergonomiques.

L'extrémité de droite comporte une partie en queue d'aronde 16 similaire à 11, limitée à droite par les facettes 17, 17'.

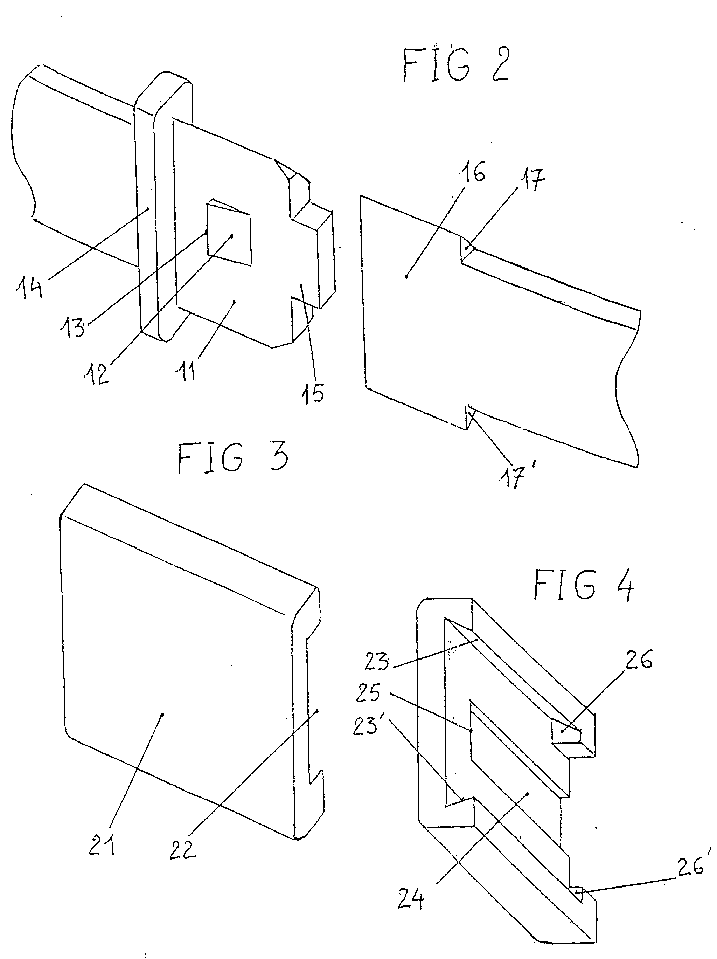

La figure 3 montre le coulisseau 21 dans la position selon laquelle il sera présenté, le créneau 22 venant coiffer la ceinture, à droite de la partie 16. Le coulisseau doit ensuite être déplacé vers la gauche en s'engageant sur la partie en queue d'aronde 16, ce qui implique qu'il porte lui-même une rainure en queue d'aronde, non visible sur cette figure.

La figure 4 montre précisément la face opposée du coulisseau 21, et notamment
- les faces obliques 23 ,23' de la rainure en queue d'aronde
- la rainure 24, se terminant vers la gauche par un bec d'accrochage 25 appelé à coopérer avec le bec 13 présenté sur la figure 2.

Pour l'agrafage, le coulisseau ayant été préalablement engagé sur la partie 16 de l'extrémité droite de la couronne, il suffit d'appuyer l'une contre l'autre les deux extrémités et de pousser le coulisseau vers la gauche. Son élasticité lui permet de monter sur la rampe 12 présentée sur la figure 2, jusqu'à ce que son bec d'accrochage 25 vienne tomber derrière le bec 13. L'agrafage est alors réalisé, les facettes 17, 17' de la couronne étant retenues par les facettes 26, 26' du coulisseau.

En position agrafée, il y a continuité de forme entre le coulisseau 21 et la collerette 14, afin de donner à l'ensemble une esthétique satisfaisante.

## Revendications

1. Couronne dentée assurant le positionnement et le maintien de l'élément filtrant d'une cartouche plissée, la couronne comportant une ceinture (1) équipée d'une série de dents (3) en nombre égal au nombre de plis de la cartouche, les dents étant dirigées vers l'intérieur de manière à s'insérer entre les plis consécutifs de la cartouche, la couronne étant formée par une ceinture (1) ouverte susceptible de prendre une forme d'anneau circulaire lors du montage, et dont les deux extrémités délimitant l'ouverture (2) sont assemblées l'une à l'autre par des moyens de fixation de manière à assurer la continuité des dents (3) et la fermeture de l'anneau,
**caractérisée en ce que** les moyens de fixation de la ceinture (1 ) sont formés par une pièce d'agrafage accessoire comprenant un coulisseau (21) engagé sur une des extrémités de la couronne, et venant s'encliqueter par coulissement sur l'autre extrémité.

2. Couronne dentée selon la revendication 1, **caractérisée en ce que** :
- l'une des extrémités de la ceinture (1) comprend une première partie en queue d'aronde (11), une rampe (12) dotée d'un premier bec d'accrochage (13), et une languette (15) terminale sur laquelle le coulisseau (21) prend appui lors de l'engagement sur la queue d'aronde (11),
- l'autre extrémité comporte une deuxième partie en queue d'aronde (16) de forme similaire à la première partie en queue d'aronde (11),
- le coulisseau (21) comprend des faces obliques (23, 23') en forme de queue d'aronde, et une rainure (24) centrale se terminant par un deuxième bec d'accrochage (25) destiné à coopérer avec le premier bec d'accrochage (13).

## Patentansprüche

1. Zahnkranz, der die Positionierung und den Halt des Filterelements einer gefalteten Patrone sicherstellt, wobei der Zahnkranz einen Ring (1) umfasst, der mit einer Reihe von Zähnen (3) versehen ist, deren Zahl gleich der Anzahl Falten der Patrone ist, wobei die Zähne nach innen gerichtet sind und sich so in die aufeinanderfolgenden Falten der Patrone einfügen, wobei der Zahnkranz von einem offenen Ring (1) gebildet wird, der bei der Montage die Form eines kreisrunden Reifens annehmen kann und dessen beide Enden, welche die Öffnung (2) begrenzen, miteinander durch Befestigungsmittel verbunden sind und so für die Durchgängigkeit der Zähne (3) und das Schließen des Reifens sorgen,
**dadurch gekennzeichnet, dass** die Mittel zur Befestigung des Rings (1) von einem zusätzlichen Klammerelement gebildet werden, das einen Schlitten (21) umfasst, der in eines der Enden des Kranzes eingreift, in das andere Ende gleitet und dort einrastet.

2. Zahnkranz nach Anspruch 1, **dadurch gekennzeichnet, dass**:
- eines der Enden des Rings (1) einen ersten Teil in Form eines Fischschwanzes (11), eine Schräge (12), die mit einer ersten Rastnase (13) versehen ist, sowie am Ende eine Zunge (15) aufweist, an die der Schlitten (21) beim Eingriff am Fischschwanz (11) anliegt,
- das andere Ende einen zweiten fischschwanzförmigen Teil (16) gleicher Form wie der erste fischschwanzförmige Teil (11) aufweist,
- der Schlitten (21) Schrägseiten (23, 23') in Fischschwanzform sowie eine zentrale Nut (24) aufweist, die in einer zweiten Rastnase (25) ausläuft, die vorgesehen ist, mit der ersten Rastnase (13) zusammenzuwirken.

## Claims

1. Toothed rim ensuring positioning and securing of the filter element of a folded filter, the rim comprising a periphery (1) equipped with a series of teeth (3) in equal number to the number of folds of the cartridge, the teeth being directed inwards so as to be inserted between the consecutive folds of the cartridge, the rim being formed by an open periphery (1) able to take the form of a circular ring when fitting is performed, and the two ends whereof confining the opening (2) are assembled to one another by fixing means so as to ensure continuity of the teeth (3) and closing of the ring,
**characterized in that** the fixing means of the periphery (1) are formed by an accessory clasping part comprising a slide runner (21) engaged on one of the ends of the rim and clipping by sliding onto the other end.

2. Toothed rim according to claim 1, **characterized in that**:
- one of the ends of the periphery (1) comprises a first dove-tailed part (11), a ramp (12) provided with a first latching nose (13), and a terminal tab (15) on which the slide runner (21) bears when engaging on the dove-tailed part (11),
- the other end comprises a second dove-tailed part (16) of similar shape to the first dove-tailed part (11),
- the slide runner (21) comprises oblique dove-tailed faces (23, 23') and a central groove (24) terminated by a second latching nose (25) designed to operate in conjunction with the first latching nose (13).
